(19) Europäisches Patentamt
European Patent Office
Office européen des brevets

(11) **EP 4 431 419 A2**

(12) **EUROPÄISCHE PATENTANMELDUNG**

(43) Veröffentlichungstag:
**18.09.2024   Patentblatt 2024/38**

(21) Anmeldenummer: **24193042.9**

(22) Anmeldetag: **23.06.2021**

(51) Internationale Patentklassifikation (IPC):
**B65G 1/04** (2006.01)    **B66F 9/14** (2006.01)
**B66F 9/07** (2006.01)    **B65G 21/00** (2006.01)
**B65G 21/08** (2006.01)    **B66F 9/18** (2006.01)

(52) Gemeinsame Patentklassifikation (CPC):
**B65G 1/04; B65G 1/0407; B65G 21/00;**
**B65G 21/08; B66F 9/149; B66F 9/18;**
B65G 2201/0232

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **24.06.2020   DE 102020207826**

(62) Dokumentnummer(n) der früheren Anmeldung(en)
nach Art. 76 EPÜ:
**21742729.3 / 4 172 074**

(71) Anmelder:
• **Fb Industry Automation GmbH
8200 Albersdorf-Prebuch (AT)**

• **FRISSENBICHLER GesmbH
8171 St. Kathrein am Offenegg (AT)**

(72) Erfinder: **Frissenbichler, Werner Josef
8200 Albersdorf-Prebuch (AT)**

(74) Vertreter: **Hoffmann Eitle
Patent- und Rechtsanwälte PartmbB
Arabellastraße 30
81925 München (DE)**

Bemerkungen:
Diese Anmeldung ist am 06-08-2024 als
Teilanmeldung zu der unter INID-Code 62 erwähnten
Anmeldung eingereicht worden.

(54) **ROLLENSHUTTLE UND HÄNGEROLLEN SHUTTLE**

(57)    Die vorliegende Erfindung betrifft ein Rollenshuttle und eine Hängerollenshuttle jeweils verfahrbar und ausgestattet mit einem einen Lastdorn (22) zum Transportieren mindestens einer zu lagernden Rolle. Bei dem Rollenshuttle ist der Lastdorn (22) an dem Laufschlitten (16) in einer zur Lagerebene eines Regalsystems im Wesentlichen parallelen Ebene schwenkbar befestigt. Das Hängerollenshuttle (42) ist entlang einer Laufschiene (40) verfahrbar. Die vorliegende Erfindung betrifft zudem ein Regalsystem und ein Hängeschienensystem inklusive Verteilstationen sowie ein Verfahren zum Betreiben des erfindungsgemäßen Regalsystems.

FIG. 1

**Beschreibung**

Die vorliegende Erfindung betrifft die Bereitstellung eines Rollenshuttles und eines Hängerollenshuttles, insbesondere im Zusammenhang mit dem Betrieb eines Regalsystems und eines Transportsystems zur Handhabung von Rollen.

In bestehenden Lagersystemen bilden Flurförderfahrzeuge und Regalbediengeräte die Grundlage für das Bestücken und das Auslagern von Artikeln. Jedoch benötigen derartige Flurförderfahrzeuge und Regalbediengeräte regelmäßig viel Platz und sind im Hinblick auf die Flexibilität der Einlagerung beschränkt.

Zudem benötigen bekannte Flurförderfahrzeuge regelmäßig viel Platz zum Manövrieren, sodass deren Einsatz zu einer Reduktion der für die Lagerung zur Verfügung stehenden Kapazitäten führt.

In Hinblick auf die obigen Ausführungen besteht das technische Problem der vorliegenden Erfindung in der Erhöhung der Flexibilität und des Durchsatzes in einem Rollen-Lager- und Transportsystem.

Gemäß der vorliegenden Erfindung wird dieses Problem gelöst durch ein Rollenshuttle zum Transportieren von Rollen in einem Regalsystem mit den Merkmalen des Patentanspruchs 1.

Zudem wird das technische Problem gelöst durch ein Hängerollenshuttle mit den Merkmalen des Patentanspruchs 8 zum Transportieren von Rollen Hängerollenshuttle, zum Transportieren von Rollen entlang eines Hängeschienensystems, sowie zu verschiedenen Auf- und Abgabepunkten mittels Verteilstationen, die mit mehreren Hängeschienen gekoppelt sind, ferner zwischen Regalsystemen oder innerhalb eines Regalsystems.

Weiterhin wird das genannte technische Problem gelöst durch ein Regalsystem zum Speichern und Transportieren von Rollen gemäß dem Patentanspruch 13, in dem zumindest das erfindungsgemäße Rollenshuttle und bevorzugt auch das erfindungsgemäße Hängerollenshuttle für den beschriebenen Zwischentransport zwischen unterschiedlichen Standorten zum Einsatz kommt.

Schließlich wird das technische Problem gelöst durch ein Verfahren zum Betreiben eines Regalsystems mit den Merkmalen des Patentanspruchs 22.

Im Rahmen der vorliegenden Erfindung können Rollen entweder einzel- oder mehrfachtief mittels eines Dornsystems ein- und ausgelagert werden. Hierfür ist das Dornsystem mit einem Kettenförderer und bevorzugt mit einem Anschlag versehen, um eine geordnete Positionierung der Rollen beim Transport und bei der Lagerung zu gewährleisten.

Mittels geeigneter Dimensionierung der Dornsystemlänge lassen sich Rollen einzel- oder mehrfachtief im Regalsystem manipulieren. In Rahmen der vorliegenden Erfindung kann das Dornsystem entweder als Rollenshuttle oder als Hängerollenshuttle ausgebildet sein. In Fall des Rollenshuttles ist das Dornsystem verschieb- und verschwenkbar an einem Fahrgestell montiert, während bei dem Hängerollenshuttle das Dornsystem an einem Hängeschlitten montiert ist, der sich an einer Fahrschiene hin- und herschieben lässt.

Bevorzugt werden die Rollen auf dem Dornsystem nach außen hin mit ansteigendem oder gleichem Durchmesser positioniert, sodass über eine Hülse am Zentrum der Rollen die Rolle aufgenommen und gehandhabt werden können.

Es ist zudem anzumerken, dass im Fall des Rollenshuttles durch die Doppellagerung des Dornsystems, d.h. verschiebbar entlang einer Querrichtung zu der Fahrtrichtung des Fahrgestells und verschwenkbar relativ zu der Aufhängung des Dorns, eine Handhabung des Dornsystems derart erreicht werden kann, dass auch bei Verschwenken des Dorns von einer Seite zu der gegenüberliegenden Seite des Fahrgestells der Dorn immer so geführt ist, dass er sich nie über die Seiten des Fahrgestells hinaus erstreckt. Dies bedingt eine besonders kompakte Ausbildung des Rollenshuttles und erlaubt eine überlagerte Betriebsweise, bei der einerseits das Rollenshuttle in Längsrichtung bewegbar ist und andererseits auch die Position der Rolle in Hinblick auf die Einlagerung gleichzeitig modifizierbar ist. Bevorzugte Ausführungsformen der vorliegenden Erfindung sind in den abhängigen Patentansprüchen gegeben.

Nachfolgend werden bevorzugte Ausführungsformen der vorliegenden Erfindung mit Bezug auf die Zeichnungen beschrieben.

Es zeigen:

Figur 1    eine Perspektivansicht des erfindungsgemäßen Rollenshuttles;

Figur 2    ein schematisches Diagramm zum Erläutern der Betriebsweise des in Figur 1 gezeigten Rollenshuttles;

Figur 3    Betriebszustände während einer überlagerten longitudinalen Bewegung des Rollenshuttles in Kombination mit einer Umpositionierung des Dornsystems;

Figur 4    eine Erläuterung der Betriebsweise des Rollenshuttles zum Einlagern von Rollen, einfach oder mehrfach tief in eine stationäre Lagerbox oder in eine mobile Lagerbox;

Figur 5    eine Perspektivansicht des erfindungsgemäßen Rollenshuttles bei dem Rollen unterschiedlichen Durchmessers auf dem Dornsystem positioniert sind;

Figur 6     eine schematische Darstellung eines Regalsystems bei der das erfindungsgemäße Rollenshuttle in Kombination mit einem erfindungsgemäßen Hängerollenshuttles zum Einsatz kommt;

Figur 7     eine schematische Darstellung zum Darstellen der Betriebsweise des erfindungsgemäßen Hängerollenshuttles;

Figur 8     eine Perspektivansicht des erfindungsgemäßen Hängerollenshuttles mit auf dem Dornsystem aufgelagerten Rollen unterschiedlichen Durchmessers;

Figur 9     eine Perspektivansicht eines erfindungsgemäßen Lagersystems;

Figur 10    ein Beispiel für den Zugang zu einem Hängerollenshuttle;

Figur 11    Illustration der Funktion des Hängerollenshuttlesystems als Transportsystem zwischen einzelnen Funktionseinheiten innerhalb eines Regalsystems;

Figur 12    weitere bespielhafte Konfiguration von Teilkomponenten des Regalsystems gemäß der vorliegenden Erfindung.

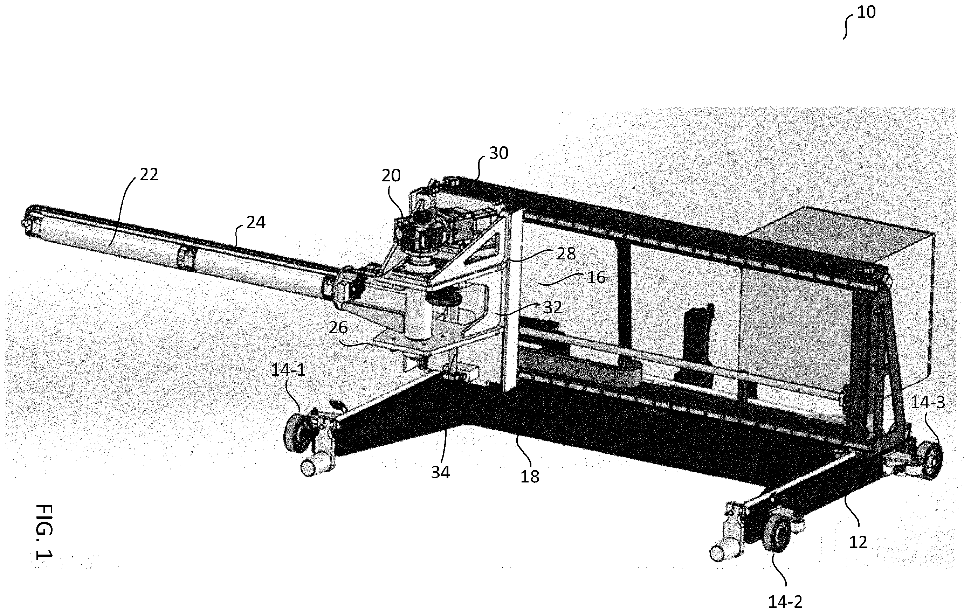

Figur 1 zeigt eine Perspektivansicht des erfindungsgemäßen Rollenshuttles.
Wie in Figur 1 gezeigt, enthält das erfindungsgemäße Rollenshuttle 10 zum Transportieren von Rollen in einem Regalsystem ein Fahrgestell 12 mit hieran montierten Rädern 14-1, ..., 14-3, um das Rollenshuttle entlang von Fahrschienen zu bewegen, die in einer Lagerebene des Regalsystems verlegt sind.
Wie in Figur 1 gezeigt, weist das erfindungsgemäße Rollenshuttle 10 einen Laufschlitten 16 auf, der an dem Fahrgestell 12 so montiert ist, dass er relativ zu der Fahrtrichtung des Rollenshuttles verfahrbar ist. Das Rollenshuttle 10 kann sich jeweils in einer Ebene oder in mehreren Ebenen bewegen, wobei im letztgenannten Fall das Rollenshuttle mittels eines Shuttleumsetzers zwischen unterschiedlichen Ebenen versetzt werden kann, sodass auch mit wenigen Rollenshuttles 10 ein Regalsystem bedient werden kann. Das Rollenshuttle 10 kann zudem auch außerhalb eines Regalsystem fahren bzw. betrieben werden. Dazu wird es über einen Vertikalumsetzer auf eine Fahrschiene außerhalb des Regalsystems gesetzt oder es fährt über eine Schienenverlängerung aus dem Regalsystem heraus, um eine Übergabestation zu bedienen. An dieser Übergabestation werden die Rollen an das Regalsystem übergeben oder aus dem Regalsystem übernommen.
Im Allgemeinen ist der Laufschlitten 16 so verfahrbar, dass die Richtung vom Verfahren gegenüber der Fahrtrichtung des Rollenshuttles 10 um einen vorbestimmten Winkel größer als Null abweicht, beispielsweise um einen Winkel von 90 Grad. Demnach ist der Laufschlitten 16 bevorzugt quer zur Fahrtrichtung des Fahrgestells 12 verfahrbar.
Wie in Figur 1 gezeigt, kann der Laufschlitten 16 eine Grundplatte 18 aufweisen, auf der dann einzelne Elemente monotierbar sind. Die Grundplatte 18 wird z.B. mittels Kettenförderer an einem vertikalen Gestell des Laufschlittens verfahren. Für den Antrieb des Laufschlittens kann hierfür ein Elektromotor 20 vorgesehen sein.
Wie in Figur 1 gezeigt, weist das erfindungsgemäße Rollenshuttle 10 zudem einen Lastdorn 22 zum Transportieren mindestens einer einzulagernden Rolle auf. Im Rahmen der vorliegenden Erfindung ist der Lastdorn 22 an dem Laufschlitten 16 verschwenkbar befestigt, und zwar in einer Ebene, die zur Grundebene des Fahrgestells bzw. zur Lagerebene des Regalsystems im Wesentlichen parallel verläuft.
Wie in Figur 1 gezeigt, enthält der Lastdorn 22 zudem einen Kettenförderer 24 mittels dem eine oder mehrere Rollen auf den Lastdorn 22 aufgenommen werden bzw. wieder abgelegt werden können.
Wie in Figur 1 gezeigt, erfolgt das Verschwenken des Lastdorns 22 mittels geeigneter Lagerung, beispielsweise mittels zweier Lagerplatten 26 und 28, die an der Grundplatte des Laufschlittens 16 formfest mittels Verstrebungen 30 und 32 arretiert sind.
Bevorzugt kann der erfindungsgemäße Lastdorn 22 an dem Laufschlitten 16 höhenverstellbar montiert sein, und beispielsweise lässt sich die Höhe mittels einer geeignet angetriebenen Spindel 34 relativ zu der Grundfläche des Fahrgestells 12 verändern. Eine derartige höhenverstellbare Ausbildung des Lastdorns 22 vereinfacht die Handhabung von Rollen beim Aufnehmen und Ablegen von dem Lastdorn 22.
Die Länge des Lastdorns 22 ist bevorzugt so dimensioniert, dass sie ein ganzzahliges Vielfaches der Breite der zu transportierenden Rollen ist. Bevorzugt lässt sich zudem ein Anschlag vorsehen, um die Rollen während eines Transports im Regalsystem zu sichern.
Weiterhin kann bevorzugt an der Unterseite des Fahrgestells 12 mindestens eine Stützrolle und/oder Gegenanlagefläche vorgesehen sein, mittels der bei relativ zum Rollenshuttle 10 seitlich ausgeschwenkten Lastdorn 22 Kippkräfte in die Fahrschienen des Regalsystems einhaltbar sind.

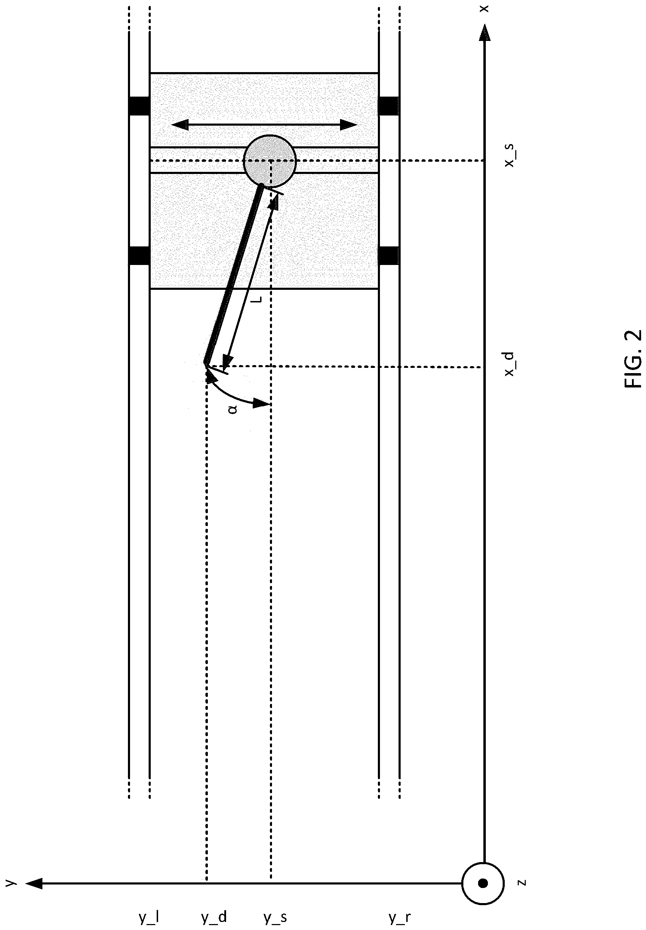

Figur 2 zeigt ein schematisches Diagramm zum Erläutern der Betriebsweise des in Figur 1 gezeigten Rollenshuttles

Wie in Figur 2 gezeigt, lässt sich der Betrieb des Rollenshuttles 10 im Regalsystem bevorzugt mit einem Koordinatensystem beschreiben, bei dem die Fahrtrichtung die X-Achse, die Einlagerungsrichtung die Y-Achse, und die Verfahrrichtung in Höhenrichtung die Z-Achse bildet.

Wie in Figur 2 gezeigt, besteht für den Betrieb des Rollenshuttles 10 ein Freiheitsgrad in Hinblick auf die Positionierung des Fahrgestells gemäß der Koordinate $x\_s$. Die Y-Position des Laufschlittens relativ zum Fahrgestell sei mittels $y\_s$ beschrieben, und die Höhenverstellung des Lastdorns relativ zum Fahrgestell sei durch $z\_s$ beschrieben. Einen weiteren Freiheitsgrad in Hinblick auf den Betrieb des Rollenshuttles ist der Schwenkwinkel des Lastdorns $\alpha$.

Unter der Annahme, dass der Lastdorn eine Länge L aufweist, lässt sich nun die Position der Spitze des Lastdorns durch folgende Beziehungen ausdrücken:

$$\texttt{x\_d = x\_s - L * cos } \alpha$$

$$\texttt{y\_d = y\_s + L * sin } \alpha$$

Im Rahmen der vorliegenden Erfindung soll eine überlagerte Bewegung des Rollenshuttles 10 entlang der X-Richtung und gleichzeitiges Verschwenken wie Verfahren des Lastdorns 22 mittels des Laufschlittens ermöglicht werden. Hierbei lautet die Betriebsbedingung:

$$\texttt{y\_l < y\_d < y\_r}$$

Setzt man in diese Betriebsbedingung die obigen Beziehungen für $x\_d$ und $y\_d$ auf und löst sie nach $\alpha$ auf, so zeigt sich, dass der zulässige Schwenkwinkel $\alpha$ abhängt von der Positionierung $y\_s$ des Lastdorns 22 und der Länge L des Lastdorns 22 gemäß:

$$\texttt{arcsin[(y\_l-y\_s)/L] > } \alpha \texttt{(y\_s) > arcsin[(y\_r-y\_s)/L]}$$

Sofern diese Bedingung eingehalten ist, ist es möglich das Rollenshuttle 10 parallel entlang der Laufrichtung der Laufschienen zu bewegen und gleichzeitig den Lastdorn 22 von der einen Seite auf die andere Seite zu positionieren.

Generell, kann somit bei Vorliegen eines Auftrags zum Ein- oder Auslagern mindestens einer Rolle so vorgegangen werden, dass zunächst eine erste Position und eine zweite Position entlang der Fahrschiene definiert wird, um die Bewegung des Rollenshuttles 10 entlang der x-Richtung im Rahmen der Abarbeitung des Auftrags festzulegen.

Anschließend ist während der Longitudinalbewegung des Rollenshuttles 10 die Position $y\_s$ und der Schwenkwinkel $\alpha$ für den Laufschlitten und das Verschwenken des Lastdorns 22 jeweils so zu regeln, dass die obige Bedingung eingehalten ist. Durch überlagerte Longitudinal- und Schwenkbewegung ist es möglich die Betriebszeiten für das Ein- und Auslagern von Rollen besonders effizient auszubilden.

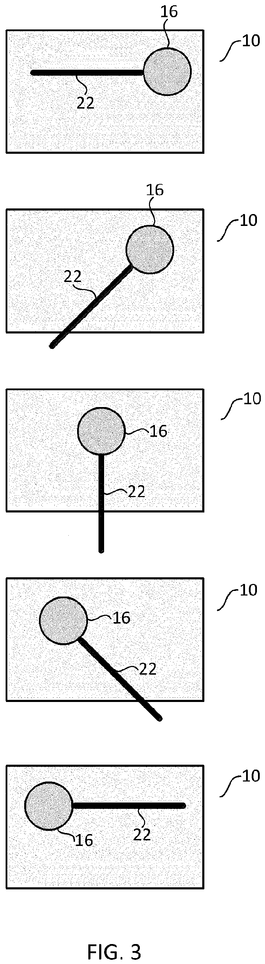

Figur 3 zeigt Betriebszustände während einer überlagerten longitudinalen Bewegung des Rollenshuttles 10 in Kombination mit einer Umpositionierung des Dornsystems 22.

Anhand der Figur 3 ist zu erkennen, dass bei Einhaltung der oben beschriebenen Betriebsbedingung während der Längsbewegung des Rollenshuttles 10 entlang der Laufschienen sich der Laufschlitten 16 sukzessive von einer Seite des Rollenshuttles 10 zu der anderen bewegt während gleichzeitig ein Verschwenken des Lastdorns 22 erfolgt.

Wie erwähnt wird hierdurch eine Überlagerung der Bewegungen erreicht und somit ein besonders effizientes Handhaben von Rollen während eines Ein- oder Auslagerungsprozesses im Regalsystem. Zu jeden Zeitpunkt ist gewährleistet, dass während der Längsbewegung des Rollenshuttles 10 der Lastdorn 22 nie über die Seite des Rollenshuttles 10 vorragt und somit in Kontakt zu weiteren Komponenten des Regalsystems gelangt.

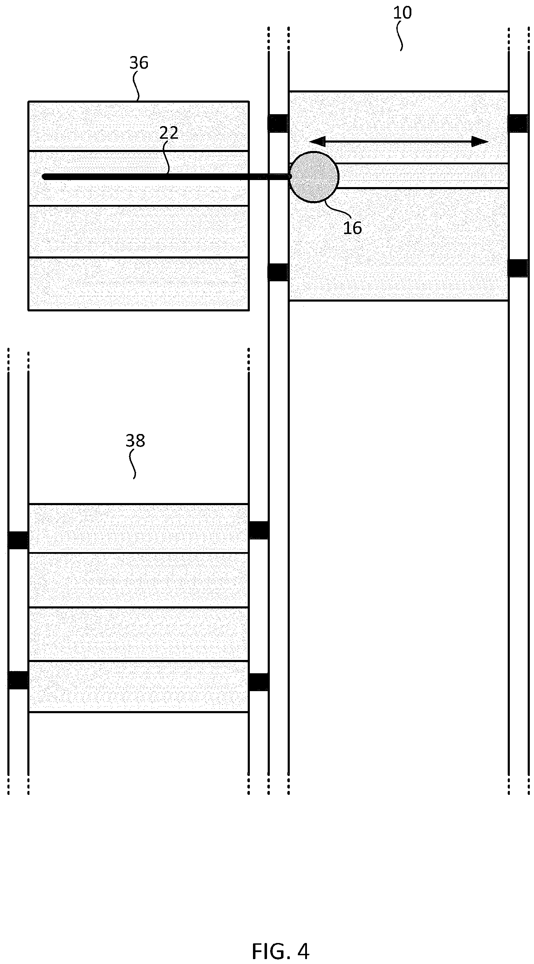

Figur 4 zeigt eine Erläuterung der Betriebsweise des Rollenshuttles 10 zum Einlagern von Rollen, einfachoder mehrfachtief in eine stationäre Lagerbox 36 oder in eine mobile Lagerbox 38.

Wie in Figur 4 gezeigt, betrifft ein weiterer Betriebszustand des erfindungsgemäßen Rollenshuttles 10 den Betrieb zum tatsächlichen Ein- und Auslagern von Rollen in das Regalsystem.

Wie in Figur 4 gezeigt, kann hierbei das Regalsystem eine stationäre Lagerbox 36 aufweisen, die fest an dem Regalsystem montiert ist. Alternativ kann eine Lagerbox auch als mobile Lagerbox 38 ausgebildet sein, die mittels Laufräder parallel zu und entlang der Fahrschienen des Rollenshuttles 10 relativ zu dem Rollenshuttle 10 positionierbar ist.

Wie in Figur 4 gezeigt, erfolgt das Ein bzw. Auslagern von Rollen entweder in der stationären Lagerbox 36 oder in der mobilen Lagerbox 38 mittels dem Laufschlitten 16 und dem Lastdorn 22. Hierbei wird der Laufschlitten 16 an den seitlichen Rand des Rollenshuttles 10 verfahren und gleichzeitig der Lastdorn 22 so verschwenkt, dass er über der Lagerbox 36 bzw. 38 positioniert ist. Dann kann durch Höhenverstellen des Laufschlittens 16 und des Lastdorns 22 erreicht werden, dass entweder Rollen mittels dem Kettenförderer 24 des Lastdorns 22 auf den Lastdorn 22 aufgenommen werden oder in umgekehrter Weise von dem Lastdorn 22 an die stationäre Lagerbox 36 oder an die mobile Lagerbox 38 abgegeben werden.

Wie in Figur 4 gezeigt, erhöht das Bereitstellen von mobilen Lagerboxen 38 die Flexibilität des Lagersystems, da es das Ein- und Auslagern von Rollen selbst dann ermöglicht, wenn das Rollenshuttle 10 sich nicht bewegt, sofern die mobile Lagerbox 38 korrekt relativ zu dem Rollenshuttle 10 verfahren wird.

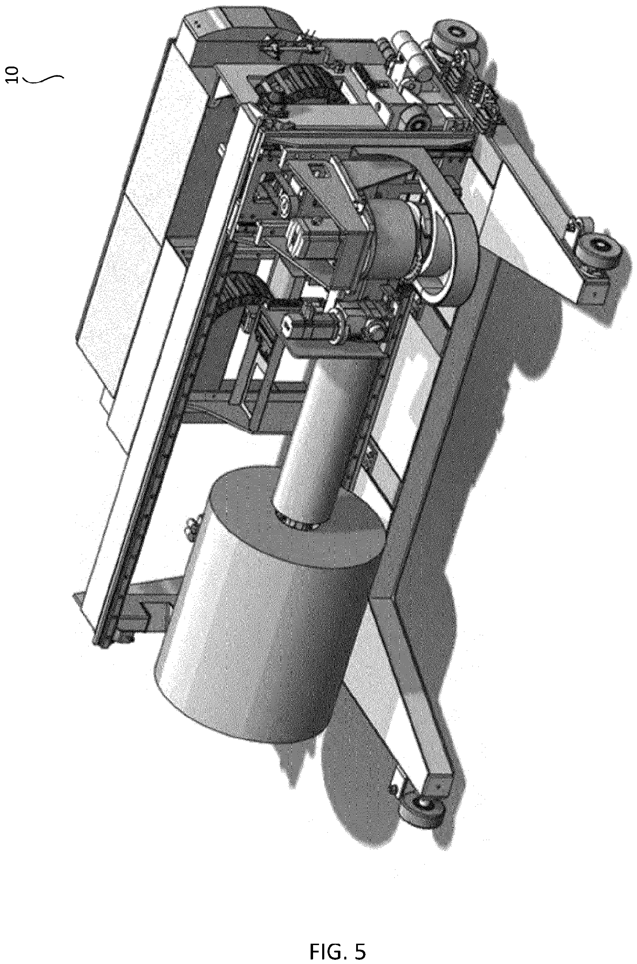

Figur 5 zeigt eine Perspektivansicht des erfindungsgemäßen Rollenshuttles 10 bei dem Rollen unterschiedlichen Durchmessers auf dem Lastdorn 22 positioniert sind

Wie in Figur 5 gezeigt, nimmt der Lastdorn 22 des Rollenshuttles 10 bevorzugt Rollen von Innen nach Außen mit zunehmender Wicklungszahl bzw. mit zunehmendem Durchmesser auf.

Wie ebenfalls in der Figur 5 gezeigt, kann das Rollenshuttle 10 geeignet mit Schaltkästen versehen sein, in welchen Schaltungselektronik für den Betrieb und die Steuerung des Antriebs und der Servo-Motoren für den Betrieb des Lastdorns 22 vorgesehen sind.

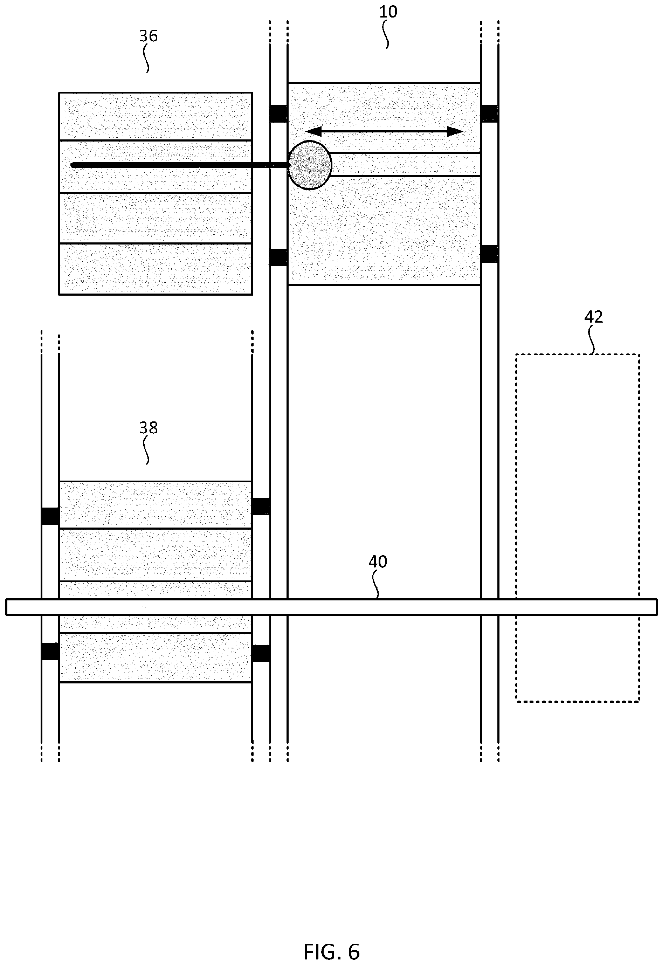

Figur 6 zeigt eine schematische Darstellung eines Regalsystems bei der das erfindungsgemäße Rollenshuttle 10 in Kombination mit einem erfindungsgemäßen Hängerollenshuttle zum Einsatz kommt.

Die Figur 6 zeigt ähnlich wie die Figur 4 das erfindungsgemäße Rollenshuttle 10, die stationäre Lagerbox 36 und die mobile Lagerbox 38. In Hinblick auf die Erläuterung dieser Einheiten wird auf die obigen Ausführungen zu der Figur 4 verwiesen.

Wie zudem in Figur 6 gezeigt, kann im Rahmen der vorliegenden Erfindung ein Hängerollenshuttle zum Einsatz kommen. Hierzu ist gemäß der vorliegenden Erfindung quer zur Fahrtrichtung des Rollenshuttles 10 eine Trägerschiene 40 vorgesehen, die nicht nur den Fahrbereich des Rollenshuttles überstreicht, sondern auch den Lagerbereich der Lagerboxen, bevorzugt der mobilen Lagerboxen 38, sowie eine Ladezone, die zum Anliefern bzw. Auslagern von Rollen vorgesehen ist.

Wie in Figur 6 gezeigt, erfolgt der Materialfluss von der Ladezone beispielsweise quer zur Fahrtrichtung entlang der Laufschiene 40 zu, beispielsweise der mobilen Lagerbox 38. Sobald Rollen geeignet in der mobilen Lagerbox 38 eingelagert sind, ist es möglich diese parallel zur Fahrschiene des Rollenshuttles 10 zu verfahren. Anschließend kann das Rollenshuttle 10 relativ zu der mobilen Lagerbox 38 positioniert sein, um dann zu lagernde oder auszulagernde Rollen von der mobilen Lagerbox 38 aufzunehmen und geeignet zu der stationären Lagerbox 36 zu verfahren. Beim Auslagern erfolgt der Materialfluss umgekehrt von der stationären Lagerbox 36 über das Rollenshuttle 10 zu der mobilen Lagerbox 38, mittels der dann ein Auslagern entlang der Hängeschiene 40 zu der Ladezone möglich ist.

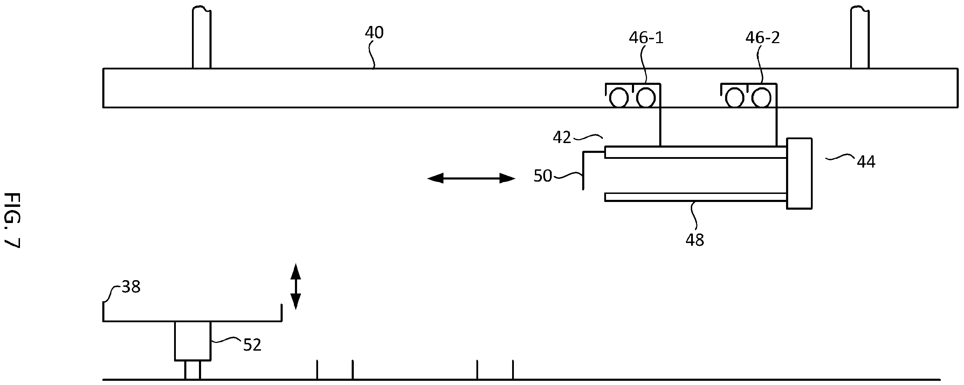

Figur 7 zeigt eine schematische Darstellung zum Darstellen der Betriebsweise des erfindungsgemäßen Hängerollenshuttles.

Wie in Figur 7 gezeigt, wird gemäß der vorliegenden Erfindung ein Hängerollenshuttle 42 zum Transportieren von Rollen an einer Übergabestation für den Weitertransport in einem Regalsystem bereitgestellt. Das Hängerollenshuttle 42 enthält ein Hängegestell 44 mit hieran montierten Rädern 46-1, 46-2, um das Hängerollenshuttle entlang der Hängeschiene 40 zu bewegen, die an der Oberseite einer Lagerebenen des Regalsystems montiert ist.

An dem Hängegestell 44 ist dann der Lastdorn 48 befestigt, mittels dem sich zu lagernde Rollen entlang der Fahrtrichtung der Hängeschiene 40 verfahren lassen. Bevorzugt ist der Lastdorn 48 des Hängegestells 44 mit einem Kettenförderer ausgestattet, um zu lagernde Rollen entlang des Lastdorns zu positionieren, d.h. entweder aufzunehmen oder abzugeben. Der Lastdorn 48 weist bevorzugt eine Länge auf, die ein ganzzahliges Vielfaches der Breite der zu transportierenden Rollen darstellt.

Wie in Figur 7 gezeigt, kann an dem Hängegestell 44 ein schwenkbarer Anschlag 50 vorgesehen sein, der zur Sicherung von Rollen während des Transports der Hängeschiene 40 dient.

Wie in Figur 7 gezeigt, wird sobald das Hängerollenshuttle 42 über beispielsweise der mobilen Lagerbox 38 positioniert ist, ein Austausch von Rollen zwischen dem Hängerollenshuttle 42 und der mobilen Lagerbox 38 bewirkt. Hierzu kann bevorzugt die mobile Lagerbox 38 mit einer Hubvorrichtung 52 versehen sein, um nach Anheben der Lagerfläche der mobilen Lagerbox 38 Rollen von dem Hängerollenshuttle 42 an die mobile Lagerbox 38 abzugeben oder von der mobilen Lagerbox 38 auf den Hängedorn 48 des Hängerollenshuttles 42 zu überführen.

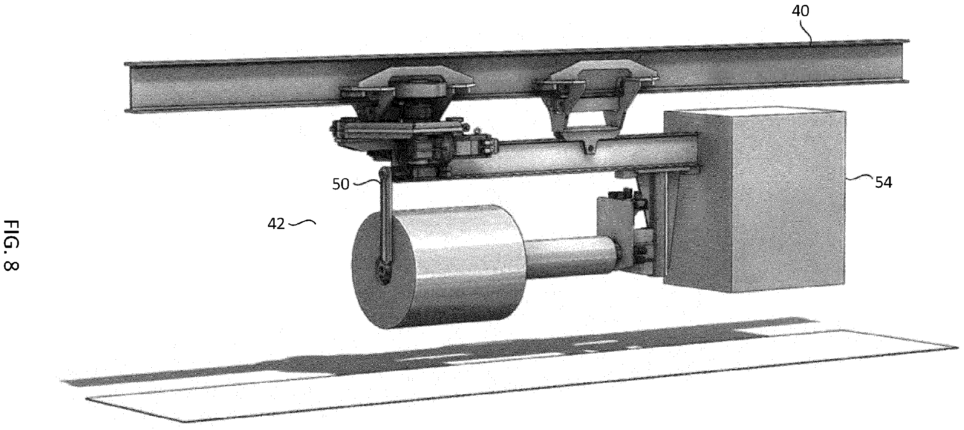

Figur 8 zeigt eine Perspektivansicht des erfindungsgemäßen Hängerollenshuttles 42 mit auf dem Dornsystem aufgelagerten Rollen unterschiedlichen Durchmessers.

Wie in Figur 8 gezeigt, wird wie im Fall des Rollenshuttles 10 auch beim Hängerollenshuttles 42 eine Bestückung des Lastdorns bevorzugt so gewählt, dass der Durchmesser der Rollen von Innen nach Außen zunimmt. Der Anschlag 50 sichert während des Transports die Rollen gegenüber einem Abgleiten von dem Lastdorn.

Wie in Figur 8 gezeigt, kann das Hängerollenshuttle 42 auch eine Einheit 54 aufweisen, in der geeignete Schaltmittel und Elektronik für den Betrieb des Hängerollenshuttles 42 vorgesehen sind.

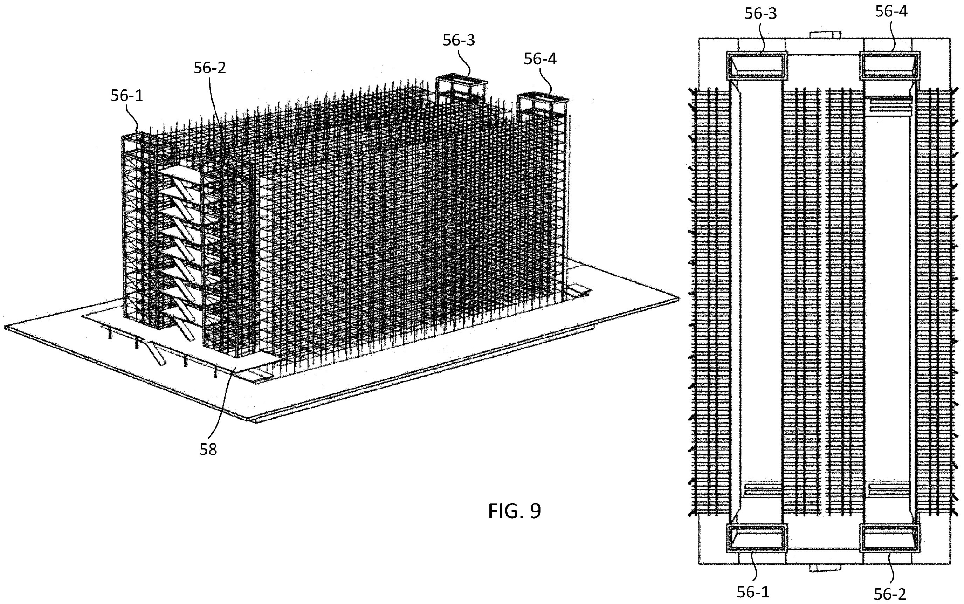

Figur 9 zeigt eine Perspektivansicht des erfindungsgemäßen Lagersystems.

Wie in Figur 9 gezeigt, weist das erfindungsgemäße Regalsystem zum Speichern und Transportieren von Rollen eine Vielzahl von Lagerebenen auf. In jeder Lagerebene verlaufen mehrere Fahrschienen, die für den Transport von Rollen vorgesehen sind. Eine Vielzahl von Lagerboxen grenzt an die jeweiligen Fahrschienen in jeder Lagerebene an. Erfindungsgemäß kann nun ein Rollenshuttle 10 gemäß der vorliegenden Erfindung entlang der Fahrschienen zum Transport von Rollen verfahren werden.

Bevorzugt erfolgt im Rahmen der vorliegenden Erfindung eine kombinierte Anwendung mindestens eines Rollenshuttles 10 mit mindestens einem Hängerollenshuttle 42, wie anhand von Figur 6 erläutert. Hierbei dient das Rollenshuttle dem Transport innerhalb des Regalsystems und das Hängerollenshuttle dem Weitertransport zwischen Regalsystem oder einzelnen Funktionsbereiche innerhalb eines Regalsystems. Mittels einem Hängerollenshuttle ist es zudem möglich, Rollen und sonstige Lagerware an weit verteilte Abgabe- und Aufnahmestationen zu verteilen bzw. von diesen Abgabe- und Aufnahmestationen ausgehend einzulagern.

Wie in Figur 9 gezeigt, kann bzw. können bevorzugt an den Stirnseiten des Regalsystems ein oder mehrere Liftsysteme 56 vorgesehen sein. Diese ermöglichen auch ein vertikales Verfahren des erfindungsgemäßen Rollenshuttles 10 über mehrere Lagerebenen des Regalsystems hinweg. Bevorzugt bedient jeder Lifte 56 eine Ladezone 58 des Regalsystems, und die Zahl, der in jeder Lagerebene eingesetzten Rollenshuttle 10 bzw. Hängerollenshuttle 42 ist abhängig vom Anwendungsfall frei konfigurierbar.

Wie in Figur 9 gezeigt, weist das erfindungsgemäße Regalsystem zudem eine Begehungsplattform 58 auf, um für Wartungs- bzw. Servicetätigkeiten einen Zugang zu dem Hängerollenshuttle zu ermöglichen. Wie zudem in Figur 9 gezeigt, ist es möglich die Fahrschiene für das Hängerollenshuttle in einer Einhausung 60 zu führen. Diese ermöglicht beispielsweise einen verbesserten Witterungsschutz oder einen Schutz von zu transportierender Ware gegenüber Einwirkungen von der Außenseite.

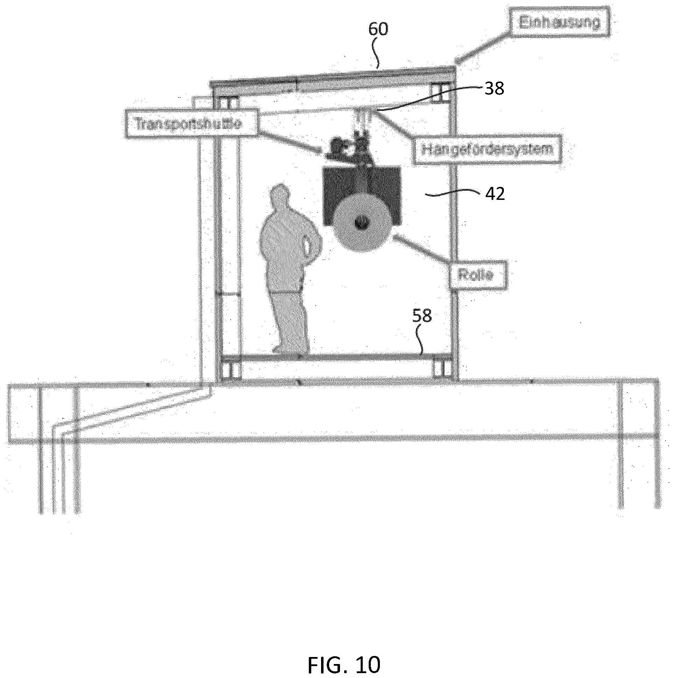

Die Figur 10 zeigt ein Beispiel für den Zugang zu einem Hängerollenshuttle. Hier ist gezeigt, dass zudem auch die Begehungsplattform in einer Einhausung 60 aufgenommen sein kann, was für einen verbesserten Schutz des Servicepersonals ermöglicht. Bevorzugt ist die Begehungsplattform höhenmäßig so angeordnet, dass ein bequemer Zugang des Servicepersonals zu dem Hängerollenshuttle möglich ist. Dies ist eine bevorzugte Ausführungsform, um eine Bedienung von Regalkomponenten, aber auch eine Handhabung von Rollen innerhalb des Regalsystems, zu ermöglichen.

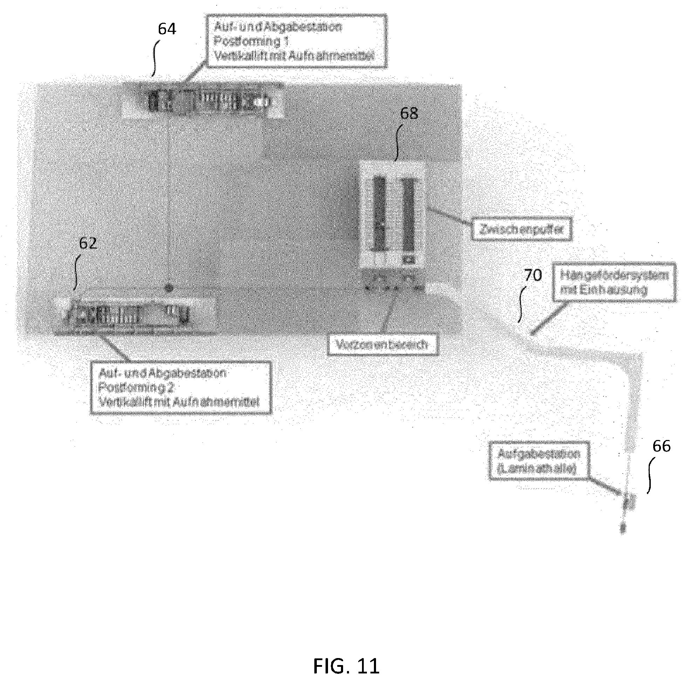

Die Figur 11 illustriert die Funktion des Hängerollenshuttlesystems als Transportsystem zwischen einzelnen Funktionseinheiten innerhalb eines Regalsystems. Wie in Figur 11 gezeigt, können beispielsweise Funktionseinheiten gebildet sein durch Auf- und Abgabestationen 62, 64, 66, dem eigentlichen Regalsystem wie in Figur 9 gezeigt, sowie einen Zwischenspeicher 68. Gemäß Figur 11 kann der Zwischenspeicher mit einem Vorzonenbereich ausgestattet sein, und somit als Puffer für die Ein- und Auslagerung von Waren und Rollen in das Regalsystem dienen. Der Vorzonenbereich kann zudem durch ein Hängefördersystem 70 mit Waren bestückt werden beziehungsweise Waren aus dem Vorzonenbereich zu der entsprechenden Aufgabestation 66 transportieren. Allgemein sind Hängefördersysteme gemäß der vorliegenden Erfindung zudem geeignet, um ganze Regalsysteme miteinander zu verbinden.

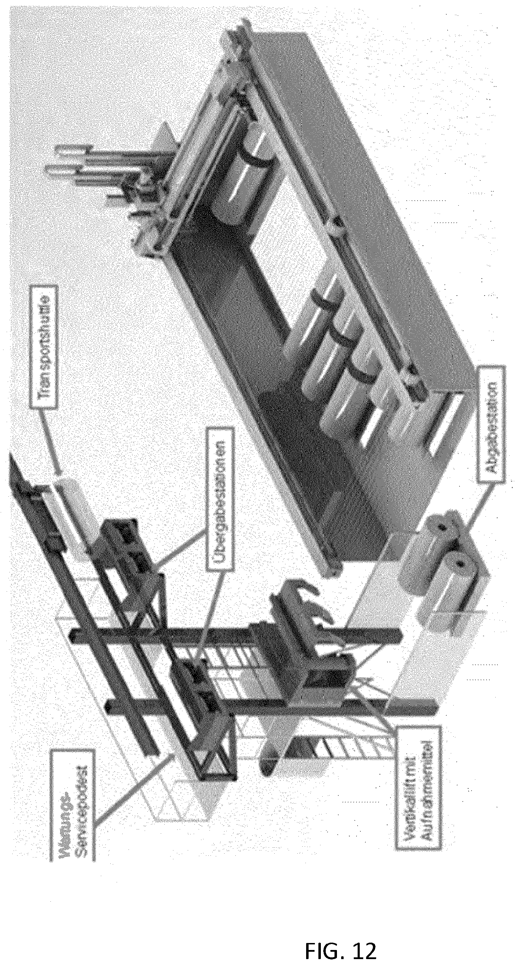

Die Figur 12 zeigt eine weitere bespielhafte Konfiguration von Teilkomponenten des Regalsystems gemäß der vorliegenden Erfindung. Wie in Figur 12 gezeigt, kann eine Bestückung des Hängerollenshuttles 42 auch über unterschiedliche Höhen hinweg erfolgen. Hierzu dient ein Vertikallift mit Aufnahmemittel 72, der eine Abgabestation 74 geeignet anfährt. Nach Aufnahme der Rollenware verfährt der Vertikallift 72 zu einer oder mehreren Übergabestationen 76, 78, an denen das Transportshuttle 42 vorbeifahren kann. Aus den Übergabestationen 76, 78 übernimmt dann das Transportshuttle 42 die Rollenware, um diese in dem Regalsystem zu verfahren. Auch hier ist es vorteilhaft eine Wartungs- bzw. Serviceplattform 58 vorzusehen, sodass das Servicepersonal es mittels einer Leiter 80 erreichen kann.

Insgesamt ermöglicht die vorliegende Erfindung den Einsatz eines sehr effizienten Rollenshuttles bzw. Hängerollenshuttles in Kombination mit einem Regalsystem zum Erzielen einfach- und mehrfachtiefer Lagerungen von Rollen. Die Handhabung von Rollen wird insbesondere durch die Anwendung von Lastdornsystemen gewährleistet. In Hinblick auf den Transport von Rollen in dem Regalsystem können Rollen zudem optimal an einem Hängerollenshuttle verfahren werden.

Weitere Beispiele der Erfindung sind wie folgt:

B1. Rollenshuttle zum Transportieren von Rollen in einem Regalsystem, enthaltend:

ein Fahrgestell (12) mit hieran montierten Rädern, um das Rollenshuttle entlang von Fahrschienen zu bewegen, die in einer Lagerebene des Regalsystems verlegt sind;

einen Laufschlitten (16), der an dem Fahrgestell (12) so montiert ist, dass er relativ zu der Fahrtrichtung des Rollenshuttle entlang einer Richtung verfahrbar ist, die von der Fahrtrichtung des Rollenshuttle um einen vorbestimmten Winkel größer als Null abweicht;

einen Lastdorn (22) zum Transportieren mindestens einer zu lagernden Rolle, der an dem Laufschlitten (16) in einer zur Lagerebene des Regalsystems im Wesentlichen parallelen Ebene schwenkbar befestigt ist.

B2. Rollenshuttle nach Beispiel 1, wobei der Laufschlitten (16) quer zur Fahrrichtung des Rollenshuttle verfahrbar ist.

B3. Rollenshuttle nach Beispiel 1 oder 2, wobei der Lastdorn (22) mit einem Kettenförderer (24) ausgestattet ist, um zu lagernde Rollen entlang des Lastdorns (22) zu positionieren.

B4. Rollenshuttle nach einem der Beispiele 1 bis 3, wobei am Lastdorn (22) ein Anschlag vorgesehen ist, um Rollen während eines Transports im Regelsystem zu sichern.

B5. Rollenshuttle nach einem der Beispiele 1 bis 4, wobei der Lastdorn (22) eine Länge aufweist, die ein ganzzahliges Vielfaches der Breite der zu transportierenden Rollen ist.

B6. Rollenshuttle nach einem der Beispiele 1 bis 5, enthaltend ein Hubsystem, um den Lastdorn (22) relativ zu dem Fahrgestell (12) anzuheben bzw. abzusenken.

B7. Rollenshuttle nach einem der Beispiele 1 bis 6, wobei an der Unterseite des Fahrgestells mindestens eine Stützrolle und/oder Gegenanlagefläche vorgesehen ist, mittels der bei relativ zum Rollenshuttle seitlich ausgeschwenktem Lastdorn (22) Kippkräfte in die Fahrschienen des Regalsystems einleitbar sind.

B8. Hängerollenshuttle zum Transportieren von Rollen entlang eines Hängeschienensystems, sowie zu verschiedenen Auf- und Abgabepunkten mittels Verteilstationen, die mit mehreren Hängeschienen gekoppelt sind, ferner zwischen Regalsystemen oder innerhalb eines Regalsystems, enthaltend:

ein Hängegestell (44) mit hieran montierten Rädern, um das Hängerollenshuttle entlang mindestens einer Hängeschiene (40) zu bewegen, die über einer Lagerebene des Regalsystems moniert ist;

einen an dem Hängestell (44) befestigten Lastdorn (48) zum Transportieren mindestens einer zu lagernden Rolle entlang der Richtung der Hängeschiene (40).

B9. Hängerollenshuttle nach Beispiel 8, wobei der Lastdorn (48) mit einem Kettenförderer ausgestattet ist, um zu lagernde Rollen entlang des Lastdorns (48) zu positionieren.

B10. Hängerollenshuttle nach Beispiel 8 oder 9, wobei der Lastdorn (48) eine Länge aufweist, die ein ganzzahliges Vielfaches der Breite der zu transportierenden Rollen ist.

B11. Hängerollenshuttle nach einem der Beispiele 8 bis 10, wobei am Hängegestell (44) ein schwenkbarer Anschlag (50) vorgesehen ist, um Rollen während eines Transports im Regelsystem zu sichern.

B12. Hängerollenshuttle nach einem der Beispiele 8 bis 11, enthaltend ein Hubsystem, um den Lastdorn (48) relativ zu der Hängeschiene (40) anzuheben bzw. abzusenken.

B13. Regalsystem zum Speichern und Transportieren von Rollen, enthaltend:

mindestens eine Lagerebene mit mindestens einem Paar von Fahrschienen, die für den Transport von Rollen vorgesehen sind;

eine Vielzahl von Lagerboxen (36, 38), die angrenzend an das mindestens ein Paar von Fahrschienen in der Lagerebene platziert sind;

mindestens ein Rollenshuttle (10) nach einem der Ansprüche 1 bis 7, das entlang dem mindestens einem Paar von Fahrschienen für den Transport von Rollen verfahrbar ist.

B14. Regalsystem nach Beispiel 13, enthaltend mindestens eine Hängeschiene (40), die quer zu der Fahrtrichtung des mindestens einem Paar von Fahrschienen über der Lagerebene angeordnet ist, um einen Fahrweg für ein Hängerollenshuttle (42) nach einem der Ansprüche 8 bis 12 über der Lagerebene zu bilden.

B15. Regalsystem nach Beispiel 13 oder 14, wobei die Hängeschiene eine Ladezone des Regalsystems bedient, um ein Anliefern bzw. ein Auslagern von Rollen zu unterstützen.

B16. Regalsystem nach einem der Beispiele 13 bis 15, wobei die Hängeschiene vorgesehen ist zum Verbinden verschiedener Auf- und Abgabepunkten in dem Regalsystem mittels Verteilstationen, die mit mehreren Hängeschienen koppelbar sind, sowie zum Verbinden unterschiedlicher Regalsysteme oder zum Verbinden einzelner Funktionsbereiche innerhalb des Regalsystems.

B17. Regalsystem nach einem der Beispiele 13 bis 16, wobei die Hängeschiene in einer Einhausung geführt ist.

B18. Regalsystem nach einem der Beispiele 13 bis 17, enthaltend eine Begehungsplattform (58), um für Wartungs- bzw. Servicetätigkeiten einen Zugang zu dem mindestens einem Rollenshuttle (10) und/oder dem mindestens einem Hängerollenshuttle (42) zu ermöglichen.

B19. Regalsystem nach einem der Beispiele 13 bis 18, wobei mindestens eine Lagerbox (38), die an das mindestens eine Paar von Fahrschienen angrenzt, in Fahrtrichtung des mindestens einen Paars von Fahrschienen verfahrbar ist.

B20. Regalsystem nach Beispiel 19, wobei die mindestens eine verfahrbare Lagerbox (38) eine Hubvorrichtung (52) aufweist, um eine Lagerfläche der Lagerbox (38) anzuheben bzw. abzusenken.

B21. Regalsystem nach einem der Beispiele 13 bis 20, das mindestens zwei Lagerebenen aufweist, wobei an mindestens einer Außenseitenfläche des Regalsystems mindestens ein Liftsystem (56) vorgesehen ist, um Rollenshuttles zwischen unterschiedlichen Lagerebenen umzusetzen.

B22. Verfahren zum Betreiben eines Regalsystems nach einem der Beispiele 13 bis 21, enthaltend die Schritte:

Bestimmen einer ersten Position $x\_s\_1$ und einer zweiten Position $x\_s\_2$ entlang dem mindestens einem Paar von Fahrschienen, um eine Bewegung eines Rollenshuttles (10) in einer ersten Richtung entlang dem mindestens einem Paar von Fahrschienen gemäß einem Auftrag zum Einlagern oder Auslagern von mindestens einer Rolle festzulegen;

Steuern der Position $y\_s$ des Laufschlittens quer zur Fahrtrichtung des Rollenshuttles und des Schwenkwinkels $\alpha$ des Lastdorns während der Bewegung des Rollenshuttles zwischen der ersten Position $x\_s$-1 und der zweiten Position $x\_s\_2$ so, dass die Bedingung

$$\texttt{arcsin[(y\_l-y\_s)/L] > }\alpha\texttt{(y\_s) > arcsin[(y\_r-y\_s)/L]}$$

erfüllt ist, wenn

L die Länge des Lastdorns (22) ist, und

die Werte yl-ys und yr-ys anhand der Position $y\_s$ des Laufschlittens relativ zu den Positionen $y\_l$ und $y\_r$ der Laufschienen festgelegt sind.

B23. Verfahren nach Beispiel 22, enthaltend die Schritte:

Steuern einer Bewegung des Hängerollenshuttles (42), derart, dass es relativ zu einer verfahrbaren Lagerbox (38) positioniert wird;

Anheben der Lagerfläche der verfahrbaren Lagerbox (38), um mindestens eine mittels dem Hängerollenshuttle transportierte Rolle auf der Lagerfläche zu platzieren;

Absenken der Lagerfläche der Lagerbox (38); und

Rückführen des Hängerollenshuttles (42) relativ zu der verfahrbaren Lagerbox (38) so, dass die verfahrbare Lagerbox (38) entlang dem mindestens einem Paar von Fahrschienen verfahren werden kann.

B24. Verfahren nach Beispiel 23, enthaltend die Schritte:

Erzielen einer Relativpositionierung zwischen der verfahrbaren Lagerbox (38) und einem Rollenshuttle (10) so, dass das Rollenshuttle (10) mindestens eine Rolle von der Lagerfläche der verfahrbaren Lagerbox (38) aufnehmen kann; und

Verfahren der aufgenommenen Rolle in dem Regalsystem mittels dem Rollenshuttle (10).

**Patentansprüche**

1. Rollenshuttle zum Transportieren von Rollen in einem Regalsystem, enthaltend:

   ein Fahrgestell (12) mit hieran montierten Rädern, um das Rollenshuttle entlang von Fahrschienen zu bewegen, die in einer Lagerebene des Regalsystems verlegt sind;
   einen Laufschlitten (16), der an dem Fahrgestell (12) so montiert ist, dass er relativ zu der Fahrtrichtung des Rollenshuttle entlang einer Richtung verfahrbar ist, die von der Fahrtrichtung des Rollenshuttle um einen vorbestimmten Winkel größer als Null abweicht;
   einen Lastdorn (22) zum Transportieren mindestens einer zu lagernden Rolle, der an dem Laufschlitten (16) in einer zur Lagerebene des Regalsystems im Wesentlichen parallelen Ebene schwenkbar befestigt ist.

2. Rollenshuttle nach Anspruch 1, wobei

   der Laufschlitten (16) quer zur Fahrrichtung des Rollenshuttle verfahrbar ist;
   und/oder
   der Lastdorn (22) mit einem Kettenförderer (24) ausgestattet ist, um zu lagernde Rollen entlang des Lastdorns (22) zu positionieren;
   und/oder
   am Lastdorn (22) ein Anschlag vorgesehen ist, um Rollen während eines Transports im Regelsystem zu sichern;
   der Lastdorn (22) eine Länge aufweist, die ein ganzzahliges Vielfaches der Breite der zu transportierenden Rollen ist;
   und/oder
   enthaltend ein Hubsystem, um den Lastdorn (22) relativ zu dem Fahrgestell (12) anzuheben bzw. abzusenken;
   und/oder
   an der Unterseite des Fahrgestells mindestens eine Stützrolle und/oder Gegenanlagefläche vorgesehen ist, mittels der bei relativ zum Rollenshuttle seitlich ausgeschwenktem Lastdorn (22) Kippkräfte in die Fahrschienen des Regalsystems einleitbar sind.

3. Hängerollenshuttle zum Transportieren von Rollen entlang eines Hängeschienensystems, sowie zu verschiedenen Auf- und Abgabepunkten mittels Verteilstationen, die mit mehreren Hängeschienen gekoppelt sind, ferner zwischen Regalsystemen oder innerhalb eines Regalsystems, enthaltend:

   ein Hängegestell (44) mit hieran montierten Rädern, um das Hängerollenshuttle entlang mindestens einer Hängeschiene (40) zu bewegen, die über einer Lagerebene des Regalsystems moniert ist;
   einen an dem Hängegestell (44) befestigten Lastdorn (48) zum Transportieren mindestens einer zu lagernden Rolle entlang der Richtung der Hängeschiene (40).

4. Hängerollenshuttle nach Anspruch 3, wobei

   der Lastdorn (48) mit einem Kettenförderer ausgestattet ist, um zu lagernde Rollen entlang des Lastdorns (48) zu positionieren;
   und/oder
   der Lastdorn (48) eine Länge aufweist, die ein ganzzahliges Vielfaches der Breite der zu transportierenden Rollen ist;
   und/oder
   am Hängegestell (44) ein schwenkbarer Anschlag (50) vorgesehen ist, um Rollen während eines Transports im Regelsystem zu sichern;
und/oder
enthaltend ein Hubsystem, um den Lastdorn (48) relativ zu der Hängeschiene (40) anzuheben bzw. abzusenken.

5. Regalsystem zum Speichern und Transportieren von Rollen, enthaltend:

mindestens eine Lagerebene mit mindestens einem Paar von Fahrschienen, die für den Transport von Rollen vorgesehen sind;
eine Vielzahl von Lagerboxen (36, 38), die angrenzend an das mindestens ein Paar von Fahrschienen in der Lagerebene platziert sind;
mindestens ein Rollenshuttle (10) nach Anspruch 1 oder 2, das entlang dem mindestens einem Paar von Fahrschienen für den Transport von Rollen verfahrbar ist.

6. Regalsystem nach Anspruch 5,

enthaltend mindestens eine Hängeschiene (40), die quer zu der Fahrtrichtung des mindestens einem Paar von Fahrschienen über der Lagerebene angeordnet ist, um einen Fahrweg für ein Hängerollenshuttle (42) nach einem der Ansprüche 8 bis 12 über der Lagerebene zu bilden;
und/oder
die Hängeschiene eine Ladezone des Regalsystems bedient, um ein Anliefern bzw. ein Auslagern von Rollen zu unterstützen.

7. Regalsystem nach Anspruch 5 oder 6, wobei die Hängeschiene vorgesehen ist zum Verbinden verschiedener Auf- und Abgabepunkten in dem Regalsystem mittels Verteilstationen, die mit mehreren Hängeschienen koppelbar sind, sowie zum Verbinden unterschiedlicher Regalsysteme oder zum Verbinden einzelner Funktionsbereiche innerhalb des Regalsystems.

8. Regalsystem nach einem der Ansprüche 5 bis 7, wobei die Hängeschiene in einer Einhausung geführt ist.

9. Regalsystem nach einem der Ansprüche 5 bis 8, enthaltend eine Begehungsplattform (58), um für Wartungs- bzw. Servicetätigkeiten einen Zugang zu dem mindestens einem Rollenshuttle (10) und/oder dem mindestens einem Hängerollenshuttle (42) zu ermöglichen.

10. Regalsystem nach einem der Ansprüche 5 bis 9, wobei mindestens eine Lagerbox (38), die an das mindestens eine Paar von Fahrschienen angrenzt, in Fahrtrichtung des mindestens einen Paars von Fahrschienen verfahrbar ist.

11. Regalsystem nach Anspruch 10, wobei die mindestens eine verfahrbare Lagerbox (38) eine Hubvorrichtung (52) aufweist, um eine Lagerfläche der Lagerbox (38) anzuheben bzw. abzusenken.

12. Regalsystem nach einem der Ansprüche 5 bis 11, das mindestens zwei Lagerebenen aufweist, wobei an mindestens einer Außenseitenfläche des Regalsystems mindestens ein Liftsystem (56) vorgesehen ist, um Rollenshuttles zwischen unterschiedlichen Lagerebenen umzusetzen.

13. Verfahren zum Betreiben eines Regalsystems nach einem der Ansprüche 5 bis 12, enthaltend die Schritte:

Bestimmen einer ersten Position x_s_1 und einer zweiten Position x_s_2 entlang dem mindestens einem Paar von Fahrschienen, um eine Bewegung eines Rollenshuttles (10) in einer ersten Richtung entlang dem mindestens einem Paar von Fahrschienen gemäß einem Auftrag zum Einlagern oder Auslagern von mindestens einer Rolle festzulegen;
Steuern der Position y_s des Laufschlittens quer zur Fahrtrichtung des Rollenshuttles und des Schwenkwinkels $\alpha$ des Lastdorns während der Bewegung des Rollenshuttles zwischen der ersten Position x_s-1 und der zweiten Position x_s_2 so, dass die Bedingung

$$\arcsin[(y\_l-y\_s)/L] > \alpha(y\_s) > \arcsin[(y\_r-y\_s)/L]$$

erfüllt ist, wenn
L die Länge des Lastdorns (22) ist, und

die Werte yl-ys und yr-ys anhand der Position y_s des Laufschlittens relativ zu den Positionen y_l und y_r der Laufschienen festgelegt sind.

14. Verfahren nach Anspruch 13, enthaltend die Schritte:

Steuern einer Bewegung des Hängerollenshuttles (42), derart, dass es relativ zu einer verfahrbaren Lagerbox (38) positioniert wird;
Anheben der Lagerfläche der verfahrbaren Lagerbox (38), um mindestens eine mittels dem Hängerollenshuttle transportierte Rolle auf der Lagerfläche zu platzieren;
Absenken der Lagerfläche der Lagerbox (38); und
Rückführen des Hängerollenshuttles (42) relativ zu der verfahrbaren Lagerbox (38) so, dass die verfahrbare Lagerbox (38) entlang dem mindestens einem Paar von Fahrschienen verfahren werden kann.

15. Verfahren nach Anspruch 14, enthaltend die Schritte:

Erzielen einer Relativpositionierung zwischen der verfahrbaren Lagerbox (38) und einem Rollenshuttle (10) so, dass das Rollenshuttle (10) mindestens eine Rolle von der Lagerfläche der verfahrbaren Lagerbox (38) aufnehmen kann; und
Verfahren der aufgenommenen Rolle in dem Regalsystem mittels dem Rollenshuttle (10).

FIG. 1

FIG. 2

FIG. 3

FIG. 4

FIG. 5

FIG. 6

FIG. 7

FIG. 8

FIG. 9

FIG. 10

64 — Auf- und Abgabestation Postforming 1 Vertikallift mit Aufnahmemittel

68 — Zwischenpuffer

62 — Auf- und Abgabestation Postforming 2 Vertikallift mit Aufnahmemittel

Vorzonenbereich

70 — Hängefördersystem mit Einhausung

66 — Aufgabestation (Laminatteile)

FIG. 11

FIG. 12